# EUROPEAN PATENT SPECIFICATION

(11) **EP 3 236 355 B1**
(45) Date of publication and mention of the grant of the patent: **24.08.2022**
(21) Application number: 17150129.9
(22) Date of filing: 03.01.2017
(51) Int. Cl.: G06F 9/48, G06F 3/0481, G06F 9/44, G06F 9/4401

(54) **METHOD AND APPARATUS FOR MANAGING TASK OF INSTANT MESSAGING APPLICATION**
VERFAHREN UND VORRICHTUNG ZUR VERWALTUNG EINER AUFGABE EINER SOFORTNACHRICHTENANWENDUNG
PROCÉDÉ ET APPAREIL DE GESTION DE TÂCHE D'APPLICATION DE MESSAGERIE INSTANTANÉE

(30) Priority: 21.04.2016 CN 201610252256
(43) Date of publication of application: 25.10.2017
(73) Proprietor: Beijing Xiaomi Mobile Software Co., Ltd., Beijing 100085 (CN)
(72) Inventor: LU, Zhenzhou, Haidian District, Beijing 100085 (CN); ZHU, Yin, Haidian District, Beijing 100085 (CN); BU, Fan, Haidian District, Beijing 100085 (CN)
(74) Representative: Sadler, Peter Frederick

(56) References cited:
- Jason R. Rich: "iPad and iPhone Tips and Tricks: For iOS 5 on iPad 2 and iPhone 4/4s", 21 December 2011 (2011-12-21), Que, Indianapolis, Indiana, USA, XP002772065, ISBN: 978-0-7897-4912-3 * page 201 * -& "iPad and iPhone Tips and Tricks: For iOS 5 on iPad 2 and iPhone 4/4s", Google Books , XP002772066, Retrieved from the Internet: URL:https://books.google.nl/books?id=yEE88 gSg6ZAC&pg=PA201&lpg=PA201&source=bl&ots=b fpYT_VNoV&sig=V5jooY36-VcCrn80e4ylAiWKDAw& hl=en&sa=X&ved=0ahUKEwjL7fbAgobVAhWDalAKHc wXDWIQ6AEIUzAG#v=onepage&q&f=false [retrieved on 2017-07-13]
- "iPad and iPhone Tips and Tricks: For iOS 5 on iPad 2 and iPhone 4/4s", Pearson Education, informIT , 2017, XP002772067, Retrieved from the Internet: URL:http://www.informit.com/store/ipad-and -iphone-tips-and-tricks-for-ios-5-on-ipad- 2-9780789749123 [retrieved on 2017-07-13]

## Description

### FIELD

The present disclosure relates to the field of the Internet, and more particularly to a method and an apparatus for managing a task of an instant messaging application.

### BACKGROUND

With the development of the Internet, phones, smart watches and such intelligent terminals, or smart terminals, have become increasingly popular, and more applications are being installed on the intelligent terminals. There are typically a plurality of functions included in one application. Taking the instant messaging application as an example, the instant messaging application may include an instant messaging function, webpage surfing function, paying function and the like. If the instant messaging application is in use, it may execute different function tasks by triggering the different functions thereof.

In the related art, if there is detected an operation of triggering a second function by a user during a process that the instant messaging application executes a first function task, the instant messaging application may exit the first function task and then create the second function task, and then execute the second function task. The first function task may be created and then executed again if the execution of the second function task is finished and it is detected an operation of triggering the first function by the user.

iPad and iPhone Tips and Tricks: For iOS 5 on iPad 2 and iPhone 4/4s, 20111221 Que, Indianapolis, Indiana, USA - ISBN 978-0-7897-4912-3; ISBN 0-7897-4912-2 describes a multitasking mode in which a user can perform two functions (a phone conversation and web browsing) at the same time.

### SUMMARY

According to a first aspect of embodiments of the present disclosure, a method for managing a task of an instant messaging application is provided, which includes
during a process of executing a first function task of the instant messaging application, switching the first function task to background if an instruction for triggering a second function of the instant messaging application is received;
creating a first task tab configured to pull up the first function task;
creating a second function task; and
after creating the second function task, pulling up the first function task to switch the first function task to foreground if a designed operation is received based on the first task tab.

In at least one embodiment of the present disclosure, after creating a first task tab, the method further includes:
hiding the first task tab during a process of executing the second function task; and
displaying the first task tab if a predetermined operation is received.

In at least one embodiment of the present disclosure, the method further includes:
if a task tab managing instruction is received based on a plurality of task tabs, managing the plurality of task tabs, the plurality of task tabs being task tabs that have been created for a plurality of function tasks of the instant messaging application in current.

In at least one embodiment of the present disclosure, during a process of executing a first function task of the instant messaging application, after switching the first function task to background if an instruction for triggering a second function of the instant messaging application is received, the method further includes:
storing status information of the first function task, the status information of the first function task at least comprises executing process of the first function task.

In at least one embodiment of the present disclosure, after creating the second function task, pulling up the first function task to switch the first function task to foreground if a designed operation is received based on the first task tab includes:
after creating the second function task, reading the status information of the first function task if the designed operation is received based on the first task tab; and
pulling up the first function task to switch the first function task to foreground according to the status information of the first function task.

According to a second aspect of embodiments of the present disclosure, an apparatus for managing a task of an instant messaging application is provided, which includes:
a first switching module, configured to, during a process of executing a first function task of the instant messaging application, switch the first function task to background if an instruction for triggering a second function of the instant messaging application is received;
a first creating module, configured to create a first task tab configured to pull up the first function task;
a second creating module, configured to create a second function task; and
a second switching module, configured to, after the second function task is created by the second creating module, pull up the first function task to switch the first function task to foreground if a designed operation is received based on the first task tab created by the first creating module.

In at least one embodiment of the present disclosure, the apparatus further includes:
a hiding module, configured to hide the first task tab during a process of executing the second function task; and
a displaying module, configured to display the first task tab hidden by the hiding module if a predetermined operation is received.

In at least one embodiment of the present disclosure, the apparatus further includes:
a managing module, configured to manage the plurality of task tabs if a task tab managing instruction is received based on a plurality of task tabs, the plurality of task tabs are task tabs that have been created for a plurality of function tasks of the instant messaging application in current.

In at least one embodiment of the present disclosure, the apparatus further includes:
a storing module configured to store status information of the first function task, the status information of the first function task at least comprises executing process of the first function task.

In at least one embodiment of the present disclosure, the second switching module further includes:
a reading unit, configured to, after the second function task is created, read the status information of the first function task if the designed operation is received based on the first task tab; and
a switching unit, configured to pull up the first function task to switch the first function task to foreground according to the status information of the first function task.

According to a third aspect of embodiments of the present disclosure, a device for managing a task of an instant messaging application is provided, which includes
a processor; and
a memory, configured to store instructions executable by the processor,
in which, the processor is configured to perform the method for managing a task of an instant messaging application according to the first aspect of embodiments of the present disclosure.

According to a fourth aspect of embodiments of the present disclosure, a computer-readable storage medium is provided. The computer-readable storage medium has stored therein instructions that, when executed by a processor of a terminal, causes the terminal to perform the method for managing a task of an instant messaging application according to the first aspect of embodiments of the present disclosure.

The technical solutions provided in embodiments of the present disclosure may include the following beneficial effects. In the embodiments of the present disclosure, when executing the first function task of the instant messaging application and receiving the instruction for triggering the second function of the instant messaging application, the intelligent terminal may switch the first function task to background, and may also store the status information of the first function task thereafter. And then, in order to pull up the first function task, the intelligent terminal may also create the first task tab. In addition, the intelligent terminal may create the second function task. Therefore, it may not only ensure that the first function task is stored precisely before the second function task is created, but also ensure that the second function task is created and executed in synchronization, thereby improving the efficiency that the intelligent terminal executes the plurality of function tasks at the same time. After creating the second function task, the intelligent terminal may pull up the first function task to switch the first function task to foreground if receiving the designed operation based on the first task tab. The embodiments of the present disclosure may pull up the first function after switching the first function task to background and creating the second function task, and further continue to execute the first function task, thereby improving the efficiency for managing the function tasks of the instant messaging application. The invention is disclosed in the appended claims.

It is to be understood that both the foregoing general description and the following detailed description are exemplary and explanatory only and are not restrictive of the present disclosure

### BRIEF DESCRIPTION OF THE DRAWINGS

The accompanying drawings are included in the specification and are parts of the specification, which are satisfied to the embodiments of the present invention and are used for describing the principles of the present invention, together with the specification.
Fig. 1 is a flow chart showing a method for managing a task of an instant messaging application according to an exemplary embodiment;
Fig. 2 is a flow chart showing another method for managing a task of an instant messaging application according to an exemplary embodiment;
Fig. 3 is a schematic diagram illustrating a displaying interface of a webpage surfing task according to an exemplary embodiment;
Fig. 4 is a schematic diagram illustrating another displaying interface of a webpage surfing task according to an exemplary embodiment;
Fig. 5 is a schematic diagram illustrating still another displaying interface of a webpage surfing task according to an exemplary embodiment;
Fig. 6 is a block diagram illustrating an apparatus for managing a task of an instant messaging application according to an exemplary embodiment;
Fig. 7 is a block diagram illustrating another device for managing a task of an instant messaging application according to an exemplary embodiment;

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Before explaining and describing the embodiments of the present disclosure in detail, application scenarios of the embodiments of the present disclosure may be illustrated. As the instant messaging application installed on the intelligent terminal may typically include instant messaging function, webpage surfing function, paying function, and such functions, the intelligent terminal may execute different function tasks if different functions of the instant messaging application are triggered. In the related art, during a process that the intelligent terminal executes the first function task, the first function task is desirable to be exited before the second function task is created and executed, if it is detected an operation that a user triggers the second function. And then, the first function task is desirable to be created and executed again, if the second function task is executed completely, while it is detected an operation that the user triggers the first function once again. The first function task may be unable to be created and executed, or the second function task is desirable to be exited to create and execute the first function task, if the second function task is being executed. As such results, the efficiency of the intelligent terminal is too low. Therefore, the embodiments of the present disclosure provide a method for managing a task of an instant messaging application, which may improve the operation efficiency of the instant messaging application and the operation efficiency of the intelligent terminal.

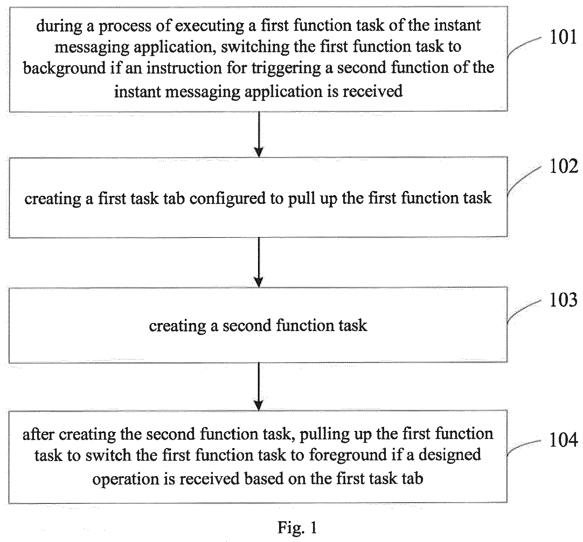

Fig. 1 is a flow chart showing a method for managing a task of an instant messaging application according to an exemplary embodiment. Referring to Fig. 1, the method for managing a task of an instant messaging application is applied in an intelligent terminal, which includes followings.

In step 101, during a process of executing a first function task of the instant messaging application, the first function task is switched to background if an instruction for triggering a second function of the instant messaging application is received.

In step 102, a first task tab configured to pull up the first function task is created.

In step 103, a second function task is created.

In step 104, after the second function task is created, the first function task is pulled up to switch the first function task to foreground if a designed operation is received based on the first task tab.

In the embodiment of the present disclosure, when executing the first function task of the instant messaging application and receiving the instruction for triggering the second function of the instant messaging application, the intelligent terminal may switch the first function task to background, and may also store the status information of the first function task thereafter. And then, in order to pull up the first function task, the intelligent terminal may also create the first task tab. In addition, the intelligent terminal may create the second function task. Therefore, it may not only ensure that the first function task is stored precisely before the second function task is created, but also ensure that the second function task is created and executed in synchronisation, thereby improving the efficiency that the intelligent terminal executes a plurality of function tasks at the same time. After creating the second function task, the intelligent terminal may pull up the first function task to switch the first function task to foreground if receiving the designed operation based on the first task tab. The embodiments of the present disclosure may pull up the first function after switching the first function task to background and creating the second function task, and further continue to execute the first function task, thereby improving the efficiency for managing the function tasks of the instant messaging application.

In another embodiment of the present disclosure, after creating the first task tab, the method further includes:
hiding the first task tab during a process of executing the second function task; and
displaying the first task tab if a predetermined operation is received.

In another embodiment of the present disclosure, the method further includes:
if a task tab managing instruction is received based on a plurality of task tabs, managing the plurality of task tabs, the plurality of task tabs being task tabs that have been created for a plurality of function tasks of the instant messaging application in current.

In another embodiment of the present disclosure, during the process of executing the first function task of the instant messaging application, after switching the first function task to background if the instruction for triggering the second function of the instant messaging application is received, the method further includes:
storing status information of the first function task, the status information of the first function task at least includes executing process of the first function task.

In another embodiment of the present disclosure, after the second function task is created, pulling up the first function task to switch the first function task to foreground if the designed operation is received based on the first task tab, includes:
after the second function task is created, reading the status information of the first function task if the designed operation is received based on the first task tab; and
pulling up the first function task to switch the first function task to foreground according to the status information of the first function task.

The above optional technical solutions may be combined in any manners to form optional embodiments of the present disclosure, which may be not elaborated herein.

By way of general explanation, intelligent terminals are capable of executing several tasks, or programs, at the same time. In some multitasking systems, one of the processes is called the foreground process, and the others are called background processes. Switching a task to background may include operating the task as a background process, rather than a foreground process. The foreground process may be the highest priority process, and is displayed on the intelligent terminal. The foreground process may be assigned the greatest amount of computing resources, and/or may be the process that accepts input from user input devices. A background process may generally remain in memory and use no CPU or other resources. As an example, in the Android operating system a background process holds an activity that is not currently visible to the user. These background processes have no direct impact on the user experience, and the system can stop them at any time to reclaim memory for a foreground, visible, or service process. Usually there are many background processes running, so they are kept in an LRU (least recently used) list to ensure that the process with the activity that was most recently seen by the user is the last to be terminated.

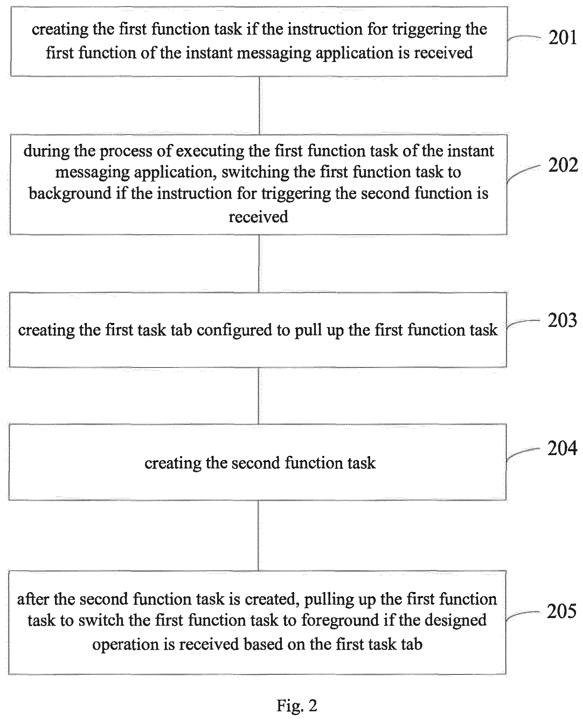

Fig. 2 is a flow chart showing a method for managing a task of an instant messaging application according to an exemplary embodiment. Referring to Fig. 2, the method for managing a task of an instant messaging application is applied in the intelligent terminal, which includes followings.

In step 201, the first function task is created if the instruction for triggering the first function of the instant messaging application is received.

The instant messaging application installed on the intelligent terminal may include instant messaging function, webpage surfing function, paying function and the like. Therefore, the first function task may be created and then may be executed, if the intelligent terminal receives the instruction for triggering the first function of the instant messaging application.

It should be illustrated that, the intelligent terminal may be a smart phone, a smart watch, smart glasses, a VR (Virtual Reality) terminal, and such intelligent terminals. Certainly, the intelligent terminal may also be other terminal on which the instant messaging application is installed, which is not specifically limited in the embodiments of the present disclosure.

It should be illustrated that, the first function may be any one of a plurality of functions included in the instant messaging application. The first function task may be a task corresponding to the first function.

Furthermore, the instruction for triggering the first function may be triggered by the user via executing a specific operation. The specific operation may be a clicking operation, a sliding operation, a speech operation, a shaking operation, and the like. Certainly, in the practical applications, the specific operation may be other operations, which is not specifically limited in the embodiments of the present disclosure.

**In** step 202, during the process of executing the first function task of the instant messaging application, the first function task is switched to background if the instruction for triggering the second function is received.

As there are the plurality of functions included in the instant messaging application installed on the intelligent terminal, the user may desire at least two functions included in the plurality of functions in the same period of time. For instance, the user desires to surf webpages during the process of instant messaging. Therefore, in order to fully satisfy the demands of the user, the intelligent terminal may also receive the instruction for triggering the second function of the instant messaging application during the process of executing the first function task of the instant messaging application. Further, in order to improve the operation efficiency of the intelligent terminal, the intelligent terminal may switch the first function task to background if receiving the instruction for triggering the second function of the instant messaging application.

It should be illustrated that, the instruction for triggering the second function may be triggered by the user via executing the specific operation.

It also should be illustrated that, the second function may be any one function of the instant messaging application.

For instance, during the process of executing the webpage surfing task, the intelligent terminal may switch the webpage surfing task to background if the instruction for triggering the instant messaging function of the instant messaging application is received.

Furthermore, after the first function task is switched to background, in order to completely store information related to the first function task, and ensure to improve the efficiency for pulling up the first function task and then improve the efficiency for managing the function tasks of the instant messaging application, the intelligent terminal, during the process of executing the first function task of the instant messaging application, may also store the status information of the first function task if receiving the instruction for triggering the second function. The status information of the first function task may at least include executing process of the first function task.

The status information, or state information, of the first function task is configured to illustrate the status, or state, of the first function task if the first function task of the instant messaging application is switched to background.

In should be illustrated that, the executing process of the first function task may include inputting process of an input field, playing process of a multi-media file (including audio, video, and the like), display location of the first function task located in the display region of the intelligent terminal, and such information. Certainly, in the practical applications, the executing process of the first function task may include other information, which is not specifically limited in the embodiments of the present disclosure.

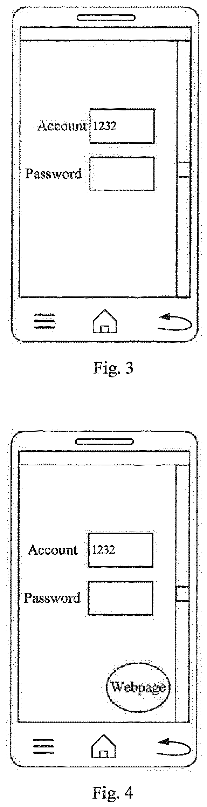

For instance, the display region of the intelligent terminal is located at 50 percent of, or halfway through, webpage content of the webpage surfing task if the intelligent terminal switches the webpage surfing task to background. As shown in Fig. 3, the display region includes a word "account", an account input field, a word "password" and a password input field. Herein there are the account input field with "1232" and the password input field with nothing. Therefore, the intelligent terminal may store the executing process of the webpage surfing task, for example storing the progress of user browsing through the webpage and one or more data entries into data input fields, such as 50 percent of webpage location and "1232" in the account input field.

Furthermore, in order to improve the accuracy for pulling up the first function task, the intelligent terminal may store both a task identifier and the status information of the first function task using a correspondance or link between the task identifier and the status information, if storing the status information of the first function task. For example the task identifier and associated status information may be stored as linked or corresponding entries in a table or other database.

The task identifier may be a task name of the first function task, a process ID (identification) of the first function task in the intelligent terminal, a thread ID, or the like. Certainly, in the practical applications, the task identifier may be other information that may enable to identify the first function task, which is not specifically limited in the embodiments of the present disclosure.

It should be illustrated that the task identifier may be the process ID if the intelligent terminal executes the first function task by occupying a process; and the task identifier may be the thread ID if the intelligent terminal executes the first function task by occupying a thread.

For instance, if the intelligent terminal stores the status information of the webpage surfing task, the task identifier of the webpage surfing task may be the task name with "webpage surfing", and the status information may be status information 1. The intelligent terminal may store "webpage surfing" and the status information 1 into the correspondence or link between the task identifier and the status information, as shown in Table 1.

**Table 1**

| task identifier | status information |
|---|---|
| webpage surfing | status information 1 |
| instant messaging | status information 2 |
| paying | status information 3 |
| ······ | ······ |

It should be illustrated that, the corresponding between the task identifier and the status information shown in Table 1 is merely taken as an example to illustrate the embodiments of the present disclosure, but Table 1 is not limitation of the embodiments of the present disclosure.

It should be also illustrated that, the status information of the first function task may include creating time of the first function task, occupied resources in the intelligent terminal, and other information, which is not specifically limited in the embodiments of the present disclosure.

In step 203, the first task tab configured to pull up the first function task is created.

As the first function task may be desirable to be pulled up and then may continue to be executed after the intelligent terminal switches the first function task to background, therefore, to facilitate pulling up the first function task, the intelligent terminal may create the first task tab.

It should be illustrated that, to facilitate pulling up the first function task for the intelligent terminal according to the first task tab, the intelligent terminal may display the first task tab in foreground.

It should be also illustrated that, the first task tab may be displayed in any location in the display region of the intelligent terminal, if the intelligent terminal displays the first task tab in foreground, which is not specifically limited in the present disclosure.

Furthermore, parts of the display region of the intelligent terminal may be occupied if the intelligent terminal displays the first task tab in foreground, thereby decreasing the display effect of the intelligent terminal. Therefore, the intelligent terminal may display the first task tab in a translucent way, or may hide the first task tab. The first task tab may be displayed if the predetermined operation is received.

It should be illustrated that, the predetermined operation may be a clicking operation, a sliding operation, a speech operation, a shaking operation and the like. Certainly, in the practical applications, the predetermined operation may be other operations, which is not specifically limited in the embodiments of the present disclosure.

In addition, the intelligent terminal may create the first task tab at any time before which the first function task has been switched to background, which is not specifically limited in the embodiments of the present disclosure.

In step 204, the second function task is created.

The first function task is switched to background and the first task tab is created, if the intelligent terminal receives the instruction for triggering the second function of the instant messaging application, and then, the second function task is created after the first function task is protected.

Furthermore, as the above description, the first task tab may be displayed in foreground after the intelligent terminal switches the first function task to background. Therefore, the intelligent terminal may display the first task tab in foreground during the process of creating and executing the second function task, i.e. display both the first task tab and the second function task being executed currently in a same display region of the intelligent terminal at a same time.

If the intelligent terminal displays both the first task tab and the second function task being executed currently in the same display region, it may display the first task tab in an opaque way or in a translucent way, and also may hide the first task tab. The first task tab may be displayed if the predetermined operation is received.

It should be illustrated that, if the intelligent terminal displays the first task tab in the translucent way or hides the first task tab, it displays the first task tab when the predetermined operation is received, so that disturbance of the first task tab is avoided when the intelligent terminal generates and executes the second function task, thereby improving the executing efficiency of the intelligent terminal.

For instance, as shown in Fig. 4, the task tab with "webpage" may be displayed in a region where the instant messaging task is displayed at a same time, during the process of creating and executing the instant messaging task.

It should be illustrated that, if the intelligent terminal includes a plurality of display screens, the intelligent terminal may display the first task tab and the second function task being executed currently respectively on the plurality of display screens, and also may display the first task tab and the second function task being executed currently on a unified display region of any one display screen of the plurality of display screens, which is not specifically limited in the embodiments of the present disclosure.

In step 205, after the second function task is created, the first function task is pulled up to switch the first function task to foreground if the designed operation is received based on the first task tab.

As the first function task is switched to background before the intelligent terminal creates the second function task, the user may desire to continue to execute the first function task. Therefore, the first function task is pulled up to switch the first function task to foreground and then continue to be executed, if the designed operation is received based on the first task tab.

In should be illustrated that, the designed operation may be a clicking operation, a sliding operation, a speech operation, a shaking operation, and the like. Certainly, in the practical applications, the designed operation may be other operations, which is not specifically limited in the embodiments of the present disclosure.

Furthermore, in order to ensure that the status of the first function task when being pulled up is the same as the status of the first function task when being switched to background, and to improve the efficiency and accuracy for pulling up the first function task, the intelligent terminal, after creating the second function task, may read the status information of the first function task if receiving the designed operation based on the first task tab, and then may pull up the first function task to switch the first function task to foreground according to the status information of the first function task.

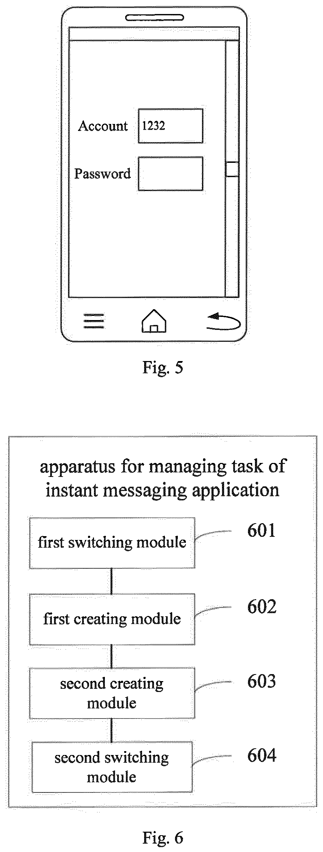

For instance, the status information of the webpage surfing task read by the intelligent terminal is status information 1. Status information 1 includes the executing process of the webpage surfing task with 50 percent of webpage location and the account input box with "1232". Therefore, the intelligent terminal may pull up the webpage surfing task according to the executing process of the webpage surfing task included in status information 1. As shown in Fig. 5, 50 percent of webpage location of the webpage surfing task and the account input box with "1232" are displayed, which may ensure that the status of the webpage surfing task being pulled up is the same as the status of the webpage surfing task when being switched to background.

Furthermore, after the intelligent terminal creates the second function task, the second function task may be executed completely or may be executed incompletely, if the designed operation is received based on the first task tab. Therefore, in order to ensure that the second function task may be pulled up if the second function task is executed incompletely and the second function task is desirable to continue to be executed, and improve the efficiency for managing the function tasks of the instant messaging application, the intelligent terminal may create the second task tab configured to pull up the second function task after switching the second function task to background, if receiving the designed operation based on the first task tab.

The intelligent terminal may pull up the second function task to switch the second function task to foreground if receiving the designed operation based on the second task tab.

It should be illustrated that, the second task tab may be created at any time before which the intelligent terminal has switched the second function task to background, which is not specifically limited in the embodiments of the present disclosure.

It should be also illustrated that, after switching the second function task to background, the intelligent terminal may store status information of the second function task, such that the status information of the second function task may be read if pulling up the second function task, and the second function task may be pulled up according to the status information of the second function task.

Furthermore, as the instant messaging application installed on the intelligent terminal includes a plurality of functions, the intelligent terminal may also desire to create and execute other function tasks including the second function task when the intelligent terminal creates and executes the first function task. That is to say, in a same period of time, the intelligent terminal may alternately create and execute the plurality of function tasks, and then switch the plurality of function tasks to background, may create a plurality of task tabs which are task tabs that have been created for the plurality of function tasks of the instant messaging application in current.

It should be illustrated that, the intelligent terminal may display each task tab included in the plurality of task tabs at the same time, and may also merely display parts of task tabs included in the plurality of task tabs. For instance, the intelligent terminal may not display the task tab corresponding to the function task being executed and in foreground.

If the intelligent terminal displays each task tab included in the plurality of task tabs at the same time, which may facilitate managing the plurality of task tabs to facilitate managing the plurality of function tasks of the instant messaging application, thereby improving the executing process of the intelligent terminal; if the intelligent terminal displays parts of task tabs included in the plurality of task tabs, which may enhance the effect for displaying the function task that is being executed currently and is in foreground, i.e. the efficiency of the function task that is being executed currently and is in foreground may be improved.

For instance, the intelligent terminal creates and executes the instant messaging task, the webpage surfing task and the paying task at the same period of time, and the intelligent terminal stores the task tab with "messaging" of the instant messaging task, the task tab with "webpage" of the webpage surfing task and the task tab with "paying" of the paying task. If the function task of the intelligent terminal in foreground currently is the instant messaging task, the intelligent terminal may display the task tabs with "messaging", "webpages" and "paying" at the same time, and may also merely display the task tabs with "webpage" and "paying".

Furthermore, if displaying the plurality of task tabs, the intelligent terminal may display the plurality of task tabs in predetermined order to improve the efficiency for managing the function task of the instant messaging application.

The predetermined order may be an order that the plurality of function tasks are created, and may be an order that the plurality of function tasks are switched. Certainly, in the practical applications, the predetermined order may be other orders, which is not specifically limited in the embodiments of the present disclosure.

Furthermore, in order to improve the efficiency for managing the function tasks of the instant messaging application and to save the system resources of the intelligent terminal, the intelligent terminal may manage the plurality of task tabs to manage the plurality of function tasks if receiving the task tab managing instruction based on the plurality of task tabs.

The task tab managing instruction may be triggered by the user via a predetermined operation.

It should be illustrated that, the managing instruction may include a deleting instruction, a switching instruction and the like. Certainly, in the practical applications, the managing instruction may include other instructions, which is not specifically limited in the embodiments of the present disclosure.

For each task tab included in the plurality of task tabs, the intelligent terminal may delete the task tab and may delete the function task corresponding to the task tab, if the managing instruction is the deleting instruction; the intelligent terminal may switch the function task corresponding to the task tab to foreground, if the managing instruction is the switching instruction.

Furthermore, to facilitate creating a new task tab to create a new function task for the intelligent terminal, the intelligent terminal may display an empty tab which does not correspond to any one function task while displaying the plurality of task tabs, and the managing instruction may also include a creating instruction. The intelligent terminal may create a function task according to the creating instruction and may configure the empty tab as the task tab corresponding to the created function task, if receiving the creating instruction based on the empty tab.

In the embodiments of the present disclosure, during the process of executing the first function task of the instant messaging application, the intelligent terminal may switch the first function task to background if receiving the instruction for triggering the second function of the instant messaging application, and the intelligent terminal may store the status information of the first function task thereafter, in which the status information at least includes the executing process of the first function task. And then, in order to pull up the first function task, the intelligent terminal may create the first function tab. In addition, the intelligent terminal may also create the second function task. Therefore it may not only ensure that the first function task is stored precisely before the second function task is created, but also ensure that the second function task is created and executed in sycnhronisation, thereby improving the efficiency that the intelligent terminal executes the plurality of function tasks at the same time. After creating the second function task, the intelligent terminal may pull up the first function task to switch the first function task to foreground if receiving the designed operation based on the first task tab. For each function task included in the plurality of function tasks, the intelligent terminal may switch the function task to background, and may create the task tab for the function task, and also may store the status information of the function task. Therefore, the intelligent may pull up the function task quickly according to the task tab and the status information of the function task, if the function task is desirable to continue to be executed, thereby improving the efficiency for managing function tasks of the instant messaging application.

Fig. 6 is a block diagram illustrating an apparatus for managing a task of an instant messaging application according to an exemplary embodiment. Referring to Fig. 6, the apparatus includes a first switching module 601, a first creating module 602, a second creating module 603 and a second switching module 604.

The first switching module 601 is configured to, during a process of executing a first function task of the instant messaging application, switch the first function task to background, if receiving an instruction for triggering a second function of the instant messaging application.

The first creating module 602 is configured to create a first task tab configured to pull up the first function task.

The second creating module 603 is configured to create a second function.

The second switching module 604 is configured to, after the second function task is created by the second creating module, pull up the first function task to switch the first function task to foreground, if a designed operation is received based on the first task tab created by the first creating module.

In another embodiment of the present disclosure, the apparatus further includes:
a hiding module configured to hide the first task tab during a process of executing the second function task; and
a displaying module configured to display the first task tab hidden by the hiding module if a predetermined operation is received.

In another embodiment of the present disclosure, the apparatus further includes:
a managing module, configured to manage the plurality of task tabs if a task tab managing instruction is received based on a plurality of task tabs, the plurality of task tabs are task tabs that have been created for a plurality of function tasks of the instant messaging application in current.

In another embodiment of the present disclosure, the apparatus further includes:
a storing module, configured to store status information of the first function task, the status information of the first function task at least comprises executing process of the first function task.

In another embodiment of the present disclosure, the second switching module includes:
a reading unit, configured to, after the second function task is created, read the status information of the first function task if the designed operation is received based on the first task tab; and
a switching module configured to pull up the first function task to switch to the first function task to foreground according to the status information of the first function task.

In the embodiments of the present disclosure, the intelligent terminal, when executing the first function task of the instant messaging application and receiving the instruction for triggering the second function of the instant messaging application, the intelligent terminal may switch the first function task to background, and may also store the status information of the first function task thereafter. And then, in order to pull up the first function task, the intelligent terminal may also create the first task tab. In addition, the intelligent terminal may create the second function task. Therefore, it may not only ensure that the first function task is stored precisely before the second function task is created, but also ensure that the second function task is created and executed in gear, thereby improving the efficiency that the intelligent terminal executes the plurality of function tasks at the same time. After creating the second function task, the intelligent terminal may pull up the first function task to switch the first function task to foreground if receiving the designed operation based on the first task tab. The embodiments of the present disclosure may pull up the first function after switching the first function task to background and creating the second function task, and further continue to execute the first function task, thereby improving the efficiency for managing the function tasks of the instant messaging application.

With respect to the apparatus in the above embodiment, the specific manners for executing operation for individual modules have been described in detail in the embodiments regarding the method, which is not elaborated in detail herein.

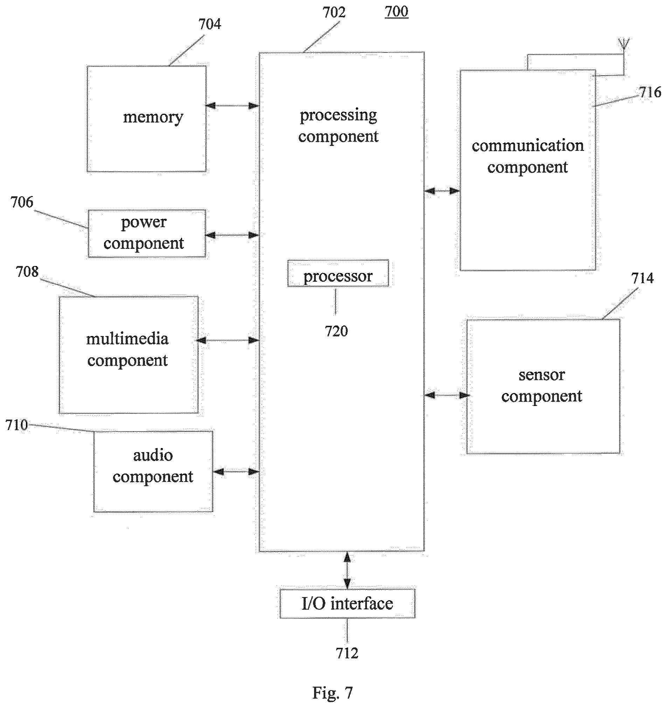

Fig. 7 is a block diagram illustrating another device 700 for managing a task of an instant messaging application according to an exemplary embodiment. For instance, the device 700 may be a mobile phone, a plate equipment, a personal digital assistant, or the like.

Referring to Fig. 7, the device 700 may include the following one or more components: a processing component 702, a memory 704, a power component 706, a multimedia component 708, an audio component 710, an Input/Output (I/O) interface 712, a sensor component 714, and a communication component 716.

The processing component 702 typically controls overall operations of the device 500, such as the operations associated with display, telephone calls, data communications, camera operations, and recording operations. The processing component 702 may include one or more processors 720 to execute instructions to execute all or parts of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a press panel (TP). If the screen includes the press panel, the screen may be implemented as a press screen to receive input signals from the user. The press panel includes one or more press sensors to sense presses, swipes, and other gestures on the press panel. The press sensors may not only sense a boundary of a press or swipe action, but also sense a duration time and a pressure associated with the press or swipe action. In some embodiments, the multimedia component 708 includes a front camera and/or a rear camera. The front camera and/or the rear camera may receive external multimedia data while the device 700 is in an operation mode, such as a photographing mode or a video mode. Each of the front camera and the rear camera may be a fixed optical lens system or have focus and optical zoom capability.

The audio component 710 is configured to output and/or input audio signals. For instance, the audio component 710 includes a microphone (MIC) configured to receive an external audio signal if the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface for the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700 and relative positioning of components, such as the display and the keypad of the device 700. The sensor component 714 may also detect a change in position of the device 700 or of a component in the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate wired or wireless communication between the device 700 and other devices. The device 700 can access a wireless network based on a communication standard, such as WIFI, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For instance, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for executing the above described methods.

In exemplary embodiments, there is also provided a non-transitory computer readable storage medium including instructions, such as the memory 704 including instructions. The above instructions are executable by the processor 720 in the device 700, for executing the above-described methods. For instance, the non-transitory computer-readable storage medium may be a ROM, a RAM, a CD-ROM, a magnetic tape, a floppy disc, an optical data storage device, and the like.

A non-transitory computer readable storage medium, if the instructions in the storage medium is executed by the processer in the mobile terminal, may allow the mobile terminal execute a method for managing a task of an instant messaging application, the method includes :
during a process of executing a first function task of the instant messaging application, switching the first function task to background if an instruction for triggering a second function of the instant messaging application is received;
creating a first task tab configured to pull up the first function task;
creating a second function task; and
after creating the second function task, pulling up the first function task to switch the first function task to foreground if a designed operation is received based on the first task tab.

In another embodiment of the present disclosure, after creating a first task tab, further including:
hiding the first task tab during a process of generating the second function task;
displaying the first task tab if a predetermined operation is received.

In another embodiment of the present disclosure, the method further includes:
if a task tab managing instruction is received based on a plurality of task tabs, managing the plurality of task tabs, the plurality of task tabs being task tabs that have been created for a plurality of function tasks of the instant messaging application in current.

In another embodiment of the present disclosure, during a process of executing a first function task of the instant messaging application, after switching the first function task to background if an instruction for triggering a second function of the instant messaging application is received, the method further including:
storing status information of the first function task, the status information of the first function task at least includes the executing process of the first function task.

In another embodiment of the present disclosure, after creating the second function task, pulling up the first function task to switch the first function task to foreground if a designed operation is received based on the first task tab includes:
after creating the second function task, reading the status information of the first function task if the designed operation is received based on the first task tab; and
pulling up the first function task to switch the first function task to foreground according to the status information of the first function task.

In the embodiments of the present disclosure, the intelligent terminal, when executing the first function task of the instant messaging application and receiving the instruction for triggering the second function of the instant messaging application, the intelligent terminal may switch the first function task to background, and may also store the status information of the first function task thereafter. And then, in order to pull up the first function task, the intelligent terminal may also create the first task tab. In addition, the intelligent terminal may create the second function task. Therefore, it may not only ensure that the first function task is stored precisely before the second function task is created, but also ensure that the second function task is created and executed in gear, thereby improving the efficiency that the intelligent terminal executes the plurality of function tasks at the same time. After creating the second function task, the intelligent terminal may pull up the first function task to switch the first function task to foreground if receiving the designed operation based on the first task tab. The embodiments of the present disclosure may pull up the first function after switching the first function task to background and creating the second function task, and further continue to execute the first function task, thereby improving the efficiency for managing the function tasks of the instant messaging application.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

## Claims

1. A method for managing tasks of an instant messaging application, applied in an intelligent terminal, and comprising:
during a process of executing a first function task of the instant messaging application, switching (101, 202) the first function task to background if an instruction for triggering a second function of the instant messaging application is received;
after switching the first function task to the background, storing current status information of the first function task and a task identifier of the first function task using a correspondence or link between them;
creating (102, 203) a first task tab configured to pull up the first function task after switching the first function task to the background; and then
creating (103, 204) a second function task for the second function;
after creating the second function task, pulling up (104, 205) the first function task to switch the first function task to foreground based on the task identifier of the first function task to display the current status information of the first function task if a designated operation is received based on the first task tab, wherein the method further comprises:
to facilitate creating a new task tab to create a function task, displaying an empty tab which does not correspond to any one function task while displaying a plurality of task tabs; and
if receiving a creating instruction based on the empty tab, creating a function task according to the creating instruction, and configuring the empty tab as a task tab corresponding to the created function task.

2. The method according to claim 1, the method, after creating a first task tab, further comprising:
hiding the first task tab during a process of executing the second function task; and
displaying the first task tab if a predetermined operation is received.

3. The method according to claim 1 or 2, further comprising:
if a task tab managing instruction is received based on the plurality of task tabs, managing the plurality of task tabs, the plurality of task tabs being task tabs that have been created for a plurality of function tasks of the instant messaging application.

4. An apparatus for managing a task of an instant messaging application, applied in an intelligent terminal, and comprising:
a first switching module (601), configured to, during a process of executing a first function task of the instant messaging application, switch the first function task to background if an instruction for triggering a second function of the instant messaging application is received;
a storing module, configured to store , after switching the first function task to the background, current status information of the first function task and a task identifier of the first function task using a correspondence or link between them;
a first creating module (602), configured to create a first task tab configured to pull up the first function task after switching the first function task to the background; and then
a second creating module (603), configured to create a second function task for the second function; and
a second switching module (604), configured to, after the second function task is created by the second creating module, pull up the first function task to switch the first function task to foreground based on the task identifier of the first function task to display the current status information of the first function task if a designated operation is received based on the first task tab created by the first creating module,
wherein the second creating module (603) is further configured to display , to facilitate creating a new task tab to create a function task, an empty tab which does not correspond to any one function task while displaying a plurality of task tabs; and if receiving a creating instruction based on the empty tab, create a function task according to the creating instruction, and configure the empty tab as a task tab corresponding to the created function task.

5. The apparatus according to claim 4, further comprising:
a hiding module, configured to hide the first task tab during a process of executing the second function task; and
a displaying module, configured to display the first task tab hidden by the hiding module if a predetermined operation is received.

6. The apparatus according to claim 4 or 5, further comprising:
a managing module, configured to manage the plurality of task tabs if a task tab managing instruction is received based on a plurality of task tabs, the plurality of task tabs are task tabs that have been created for a plurality of function tasks of the instant messaging application.

7. A computer-readable storage medium having stored therein instructions that, when executed by a processor of a terminal, causes the terminal to perform the method for managing a task of an instant messaging application according to any one of claims 1-3.

## Patentansprüche

1. Verfahren zur Verwaltung von Aufgaben einer Sofortnachrichtenanwendung, das in einem intelligenten Endgerät angewendet wird und umfasst:
während eines Prozesses des Ausführens einer ersten Funktionsaufgabe der Sofortnachrichtenanwendung, Umschalten (101, 202) der ersten Funktionsaufgabe in den Hintergrund, wenn eine Anweisung zum Auslösen einer zweiten Funktion der Sofortnachrichtenanwendung empfangen wird;
nach Umschalten der ersten Funktionsaufgabe in den Hintergrund Speichern von aktuellen Statusinformationen der ersten Funktionsaufgabe und einer Aufgabenkennung der ersten Funktionsaufgabe unter Verwendung einer Übereinstimmung oder Verknüpfung zwischen ihnen;
Erstellen (102, 203) einer ersten Aufgabenregisterkarte, die zum Aufrufen der ersten Funktionsaufgabe nach Umschalten der ersten Funktionsaufgabe in den Hintergrund konfiguriert ist; und dann
Erstellen (103, 204) einer zweiten Funktionsaufgabe für die zweite Funktion;
nach Erstellen der zweiten Funktionsaufgabe Aufrufen (104, 205) der ersten Funktionsaufgabe zum Umschalten der ersten Funktionsaufgabe in den Vordergrund auf Basis der Aufgabenkennung der ersten Funktionsaufgabe zum Anzeigen der aktuellen Statusinformationen der ersten Funktionsaufgabe, wenn eine bezeichnete Operation auf Basis der ersten Aufgabenregisterkarte empfangen wird, wobei das Verfahren ferner umfasst:
Anzeigen, um das Erstellen einer neuen Aufgabenregisterkarte zum Erstellen einer Funktionsaufgabe zu ermöglichen, einer leeren Registerkarte, die keiner Funktionsaufgabe entspricht, während mehrere Aufgabenregisterkarten angezeigt werden; und,
wenn eine Erstellungsanweisung auf Basis der leeren Registerkarte empfangen wird, Erstellen einer Funktionsaufgabe gemäß der Erstellungsanweisung und Konfigurieren der leeren Registerkarte als eine Aufgabenregisterkarte, die der erstellten Funktionsaufgabe entspricht.

2. Verfahren nach Anspruch 1, wobei das Verfahren nach Erstellen einer ersten Aufgabenregisterkarte ferner umfasst:
Ausblenden der ersten Aufgabenregisterkarte während eines Prozesses des Ausführens der zweiten Funktionsaufgabe; und
Anzeigen der ersten Aufgabenregisterkarte, wenn eine vorbestimmte Operation empfangen wird.

3. Verfahren nach Anspruch 1 oder 2, das ferner umfasst:
wenn eine Aufgabenregisterkarten-Verwaltungsanweisung auf Basis der mehreren Aufgabenregisterkarten empfangen wird, Verwalten der mehreren Aufgabenregisterkarten, wobei die mehreren Aufgabenregisterkarten Aufgabenregisterkarten sind, die für mehrere Funktionsaufgaben der Sofortnachrichtenanwendung erstellt wurden.

4. Vorrichtung zur Verwaltung einer Aufgabe einer Sofortnachrichtenanwendung, die in einem intelligenten Modul angewendet wird und umfasst:
ein erstes Umschaltmodul (601), das zum Umschalten der ersten Funktionsaufgabe in den Hintergrund, wenn eine Anweisung zum Auslösen einer zweiten Funktion der Sofortnachrichtenanwendung empfangen wird, während eines Prozesses des Ausführens einer ersten Funktionsaufgabe der Sofortnachrichtenanwendung konfiguriert ist;
ein Speichermodul, das zum Speichern, nach Umschalten der ersten Funktionsaufgabe in den Hintergrund, von aktuellen Statusinformationen der ersten Funktionsaufgabe und einer Aufgabenkennung der ersten Funktionsaufgabe unter Verwendung einer Übereinstimmung oder Verknüpfung zwischen ihnen konfiguriert ist;
ein erstes Erstellungsmodul (602), das zum Erstellen einer ersten Aufgabenregisterkarte konfiguriert ist, die zum Aufrufen der ersten Funktionsaufgabe nach Umschalten der ersten Funktionsaufgabe in den Hintergrund konfiguriert ist; und dann
ein zweites Erstellungsmodul (603), das zum Erstellen einer zweiten Funktionsaufgabe für die zweite Funktion konfiguriert ist; und
ein zweites Umschaltmodul (604), das zum Aufrufen der ersten Funktionsaufgabe, nach Erstellen der zweiten Funktionsaufgabe durch das zweite Erstellungsmodul, zum Umschalten der ersten Funktionsaufgabe in den Vordergrund auf Basis der Aufgabenkennung der ersten Funktionsaufgabe zum Anzeigen der aktuellen Statusinformationen der ersten Funktionsaufgabe, wenn eine bezeichnete Operation auf Basis der von dem ersten Erstellungsmodul erstellten ersten Aufgabenregisterkarte empfangen wird, konfiguriert ist,
wobei das zweite Erstellungsmodul (603) ferner zum Anzeigen, um das Erstellen einer neuen Aufgabenregisterkarte zum Erstellen einer Funktionsaufgabe zu ermöglichen, einer leeren Registerkarte, die keiner Funktionsaufgabe entspricht, während mehrere Aufgabenregisterkarten angezeigt werden, konfiguriert ist; und, wenn eine Erstellungsanweisung auf Basis der leeren Registerkarte empfangen wird, Erstellen einer Funktionsaufgabe gemäß der Erstellungsanweisung und Konfigurieren der leeren Registerkarte als eine Aufgabenregisterkarte, die der erstellten Funktionsaufgabe entspricht.

5. Vorrichtung nach Anspruch 4, die ferner umfasst:
ein Ausblendemodul, das zum Ausblenden der ersten Aufgabenregisterkarte während eines Prozesses des Ausführens der zweiten Funktionsaufgabe konfiguriert ist; und
ein Anzeigemodul, das zum Anzeigen der von dem Ausblendemodul ausgeblendeten ersten Aufgabenregisterkarte, wenn eine vorbestimmte Operation empfangen wird, konfiguriert ist.

6. Vorrichtung nach Anspruch 4 oder 5, das ferner umfasst:
ein Verwaltungsmodul, das zum Verwalten der mehreren Aufgabenregisterkarten, wenn eine Aufgabenregisterkarten-Verwaltungsanweisung auf Basis der mehreren Aufgabenregisterkarten empfangen wird, konfiguriert ist, wobei die mehreren Aufgabenregisterkarten Aufgabenregisterkarten sind, die für mehrere Funktionsaufgaben der Sofortnachrichtenanwendung erstellt wurden.

7. Computerlesbares Speichermedium, das in ihm gespeicherte Anweisungen aufweist, die bei Ausführung durch einen Prozessor eines Endgeräts das Endgerät zum Durchführen des Verfahrens zur Verwaltung einer Aufgabe einer Sofortnachrichtenanwendung nach einem der Ansprüche 1 bis 3 veranlassen.

## Revendications

1. Procédé de gestion de tâches dans une application de messagerie instantanée, appliqué à un terminal intelligent et comprenant :
pendant un processus d'exécution d'une première tâche de fonction de l'application de messagerie instantanée, commuter (101, 202) la première tâche de fonction à l'arrière-plan si une instruction de déclenchement d'une deuxième fonction de l'application de messagerie instantanée est reçue ;
après avoir commuté la première tâche de fonction à l'arrière-plan,
stocker des informations d'état courant de la première tâche de fonction et un identificateur de tâche de la première tâche de fonction en utilisant une correspondance ou un lien entre eux ;
créer (102, 103) un onglet de première tâche configuré pour rappeler la première tâche de fonction après avoir commuté la première tâche de fonction à l'arrière-plan ; et puis
créer (103, 204) une deuxième tâche de fonction pour la deuxième fonction ;
après avoir créé la deuxième tâche de fonction, rappeler (104, 205) la première tâche de fonction pour commuter la première tâche de fonction au premier plan sur la base de l'identificateur de tâche de la première tâche de fonction afin d'afficher les informations d'état courant de la première tâche de fonction si une opération désignée est reçue sur la base de l'onglet de première tâche, où le procédé comprend en outre :
pour faciliter la création d'une nouvel onglet de tâche pour créer une tâche de fonction,
afficher un onglet vide qui ne correspond pas à une tâche de fonction quelconque tout en affichant une pluralité d'onglets de tâche ; et
si une instruction de création basée sur l'onglet vide est reçue, créer une tâche de fonction conformément à l'instruction de création et configurer l'onglet vide comme un onglet de tâche correspondant à la tâche de fonction créée.

2. Procédé selon la revendication 1, après avoir créé un onglet de première tâche, le procédé comprenant en outre :
dissimuler l'onglet de première tâche durant un processus d'exécution de la deuxième tâche de fonction ; et
afficher l'onglet de première tâche si une opération prédéterminée est reçue.

3. Procédé selon la revendication 1 ou 2, comprenant en outre :
si une instruction de gestion d'onglets de tâche est reçue sur la base de la pluralité d'onglets de tâche, gérer la pluralité d'onglets de tâche, la pluralité d'onglets de tâche étant des onglets de tâche qui ont été créés pour une pluralité de tâches de fonction de l'application de messagerie instantanée.

4. Appareil de gestion d'une tâche dans une application de messagerie instantanée, appliqué dans un terminal intelligent et comprenant :
un premier module de commutation (601), configuré pour, durant un processus d'exécution d'une première tâche de fonction de l'application de messagerie instantanée, commuter la première tâche de fonction à l'arrière-plan si une instruction de déclenchement d'une deuxième fonction de l'application de messagerie instantanée est reçue ;
un module de stockage, configuré pour stocker, après avoir commuté la première tâche de fonction à l'arrière-plan, des informations d'état courant de la première tâche de fonction et un identificateur de tâche de la première tâche de fonction en utilisant une correspondance ou un lien entre eux ;
un premier module de création (602), configuré pour créer un onglet de première tâche configuré pour rappeler la première tâche de fonction après avoir commuté la première tâche de fonction à l'arrière-plan ; et puis
une deuxième module de création (603), configuré pour créer une deuxième tâche de fonction pour la deuxième fonction ; et
un deuxième module de commutation (604), configuré pour, après la création de la deuxième tâche de fonction par le deuxième module de création, rappeler la première tâche de fonction pour commuter la première tâche de fonction au premier plan sur la base de l'identificateur de tâche de la première tâche de fonction afin d'afficher les informations d'état courant de la première tâche de fonction si une opération désignée est reçue sur la base de l'onglet de première tâche créé par le premier module de création,
dans lequel le deuxième module de création (603) est configuré en outre pour afficher, afin de faciliter la création d'un nouvel onglet de tâche pour créer une tâche de fonction, un onglet vide qui ne correspond pas à une tâche de fonction quelconque tout en affichant une pluralité d'onglets de tâche ; et si une instruction de création basée sur l'onglet vide est reçue, créer une tâche de fonction conformément à l'instruction de création, et configurer l'onglet vide comme un onglet de tâche correspondant à la tâche de fonction créée.

5. Appareil selon la revendication 4, comprenant en outre :
un module de dissimulation, configuré pour dissimuler l'onglet de première tâche durant un processus d'exécution de la deuxième tâche de fonction ; et
un module d'affichage, configuré pour afficher l'onglet de première tâche dissimulé par le module de dissimulation si une opération prédéterminée est reçue.

6. Appareil selon la revendication 4 ou 5, comprenant en outre :
un module de gestion, configuré pour gérer la pluralité d'onglets de tâche si un instruction de gestion d'onglets de tâche est reçue sur la base d'une pluralité d'onglets de tâche, la pluralité d'onglets de tâche sont des onglets de tâche qui ont été créés pour une pluralité de tâches de fonction de l'application de messagerie instantanée.

7. Support de stockage lisible par ordinateur ayant des instructions stockées dessus qui, lorsque exécutées par un processeur d'un terminal, font que le terminal mette en oeuvre le procédé de gestion d'une tâche d'une application de messagerie instantanée selon l'une quelconque des revendications 1-3.
